(19) Europäisches Patentamt
European Patent Office
Office européen des brevets

(11) EP 1 348 738 A2

(12) **EUROPÄISCHE PATENTANMELDUNG**

(43) Veröffentlichungstag:
**01.10.2003 Patentblatt 2003/40**

(51) Int Cl.[7]: **C09B 45/22**
// C08K5/3462

(21) Anmeldenummer: **03005499.3**

(22) Anmeldetag: **18.03.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **28.03.2002 DE 10213982**

(71) Anmelder: **Bayer Aktiengesellschaft
51368 Leverkusen (DE)**

(72) Erfinder:
- **Feldhues, Ulrich, Dr.
51465 Bergisch Gladbach (DE)**
- **Linke, Frank
51069 Köln (DE)**
- **Göbel, Ronald
51371 Leverkusen (DE)**
- **Hermann, Udo, Dr.
41541 Dormagen (DE)**
- **Endert, Sabine
42113 Wuppertal (DE)**

(54) **Metallkomplexpigmente**

(57) Metallkomplexe von Metallen der Scandiumgruppe mit einer Azo-Verbindung, die der Formel (I) oder einer ihrer tautomeren Strukturen entspricht

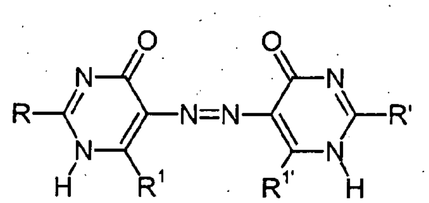

(I)

worin

R für OH, $NH_2$, NH-CN, Arylamino oder Acylamino steht und

R' für $NH_2$, NH-CN, Arylamino oder Acylaminö steht und

$R^1$ und $R^{1'}$ unabhängig voneinander -OH oder -$NH_2$ bedeuten.

EP 1 348 738 A2

## Beschreibung

Die Erfindung betrifft die Verwendung von Metallkomplexen als Pigmente, neue Metallkomplexe sowie ein Verfahren zu deren Herstellung.

Aus EP-A 994 163 sind Metallkomplexpigmente bekannt, die aber zusätzlich eine Verbindung eingelagert enthalten. Diese Einlagerungsverbindungen haben zum Teil sehr gute Lichtechtheiten aber durch die Einlagerung relativ niedrige Farbstärken. Ihre Herstellung erfordert naturgemäß einen zusätzlichen Syntheseschritt. Aufgabe dieser Erfindung war es, weitere Pigmente bereitzustellen, die ohne Einlagerung organischer oder anorganischer Verbindungen hervorragende Lichtechtheiten aufweisen und gleichzeitig hohe Farbstärken haben.

Die Erfindung betrifft nun die Verwendung von Metallkomplexen, die Komplexe von Metallen der Scandiumgruppe mit einer Azo-Verbindung, der Formel (I) oder einer ihrer tautomeren Strukturen entsprechen

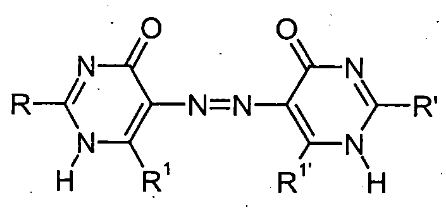

(I),

in der

R für OH, $NH_2$, NH-CN, Arylamino oder Acylamino steht und

R' für $NH_2$, NH-CN, Arylamino oder Acylamino steht und

$R^1$ und $R^{1'}$ unabhängig voneinander -OH oder $-NH_2$ bedeuten,

als Pigmente.

Bevorzugt werden die Metallkomplexe als Pigmente zum Färben bzw. Einfärben von natürlichen, halbsynthetischen oder synthetischen organischen oder anorganischen Stoffen eingesetzt.

Substituenten in der Bedeutung von Aryl in Formel (I) bezeichnen vorzugsweise Phenyl oder Naphthyl, die beispielsweise durch Halogen wie F, Cl, Br, -OH, $C_1$-$C_6$-Alkyl, $C_1$-$C_6$-Alkoxy, $-NH_2$, $-NO_2$ und -CN sustituiert sein können.

Substituenten in der Bedeutung von Acyl in Formel (I) bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl oder Naphthyl substituiertes Guanyl, wobei die genannten Alkylreste beispielsweise durch Halogen wie Cl, Br, F, -OH, -CN, $-NH_2$ oder $C_1$-$C_6$-Alkoxy substituiert sein können und die genannten Phenylund Naphthylreste beispielsweise durch Halogen wie F, Cl, Br, -OH, $C_1$-$C_6$-Alkyl, $C_1$-$C_6$-Alkoxy, $-NH_2$, $-NO_2$ und -CN substituiert sein können.

Die Scandiumgruppe umfaßt die Metalle Scandium (Sc), Yttrium (Y), Lanthan (La), Cer (Ce), Praseodym (Pr), Neodym (Nd), Promethium (Pm), Samarium (Sm) Europium (Eu), Gadolinium (Gd), Terbium (Tb), Dysprosium (Dy), Holmium (Ho), Erbium (Er), Thulium (Tm), Ytterbium (Yb), Lutetium (Lu).

In den Metallkomplexen ist als besonders bevorzugtes Metall Y, La, Ce, Pr und Nd jeweils in der dreiwertigen Oxidationsstufe, besonders bevorzugt Ce, Pr und Nd, ganz besonders bevorzugt Ce, zu nennen.

Unter Metallkomplexe werden im Rahmen dieser Anmeldung auch Metallsalze verstanden.

Bevorzugt sind organische Metallkomplexe solcher Azo-Verbindungen der Formel (I), die in Form ihrer freien Säure den Formeln (IIa) oder (IIb) oder einer ihrer tautomeren Strukturen entsprechen

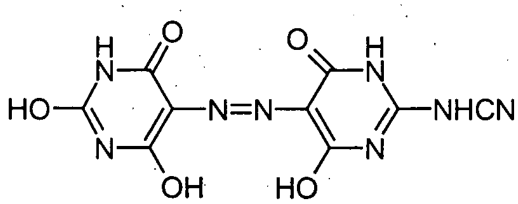

(IIa),

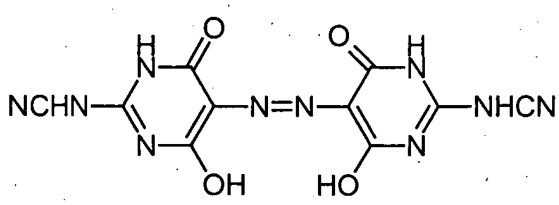

(IIb).

Ebenfalls bevorzugt sind solche Metallkomplexe der Formel (I), insbesondere solche der Formeln (IIa) und (IIb), bei denen auf ein Zentralatom aus der Scandiumgruppe in dem Metallkomplex eine Azoeinheit kommt, (sogenannte 1:1-Komplexe).

Ganz besonders bevorzugt sind dabei solche Metallkomplexe, insbesondere solche der Formeln (IIa) und (IIb), bei denen auf ein Zentralatom Z aus der Scandiumgruppe in dem Metallkomplex zwei Azoeinheiten kommen (sogenannte 2:1-Komplexe).

Besonders bevorzugt entsprechen sie dabei in Form ihrer freien Säure der Formel (IIIa) oder (IIIb) oder einer ihrer tautomeren Strukturen

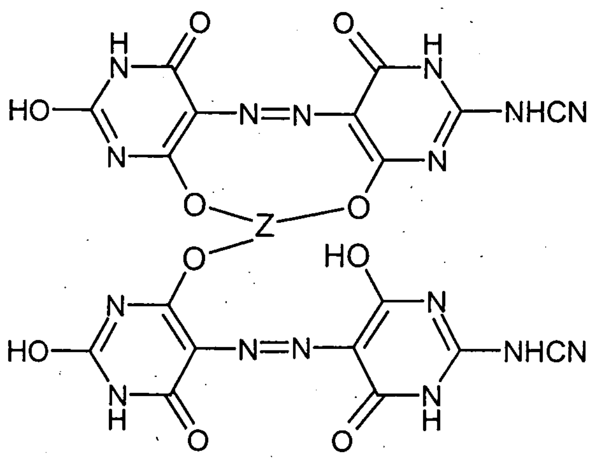

(IIIa),

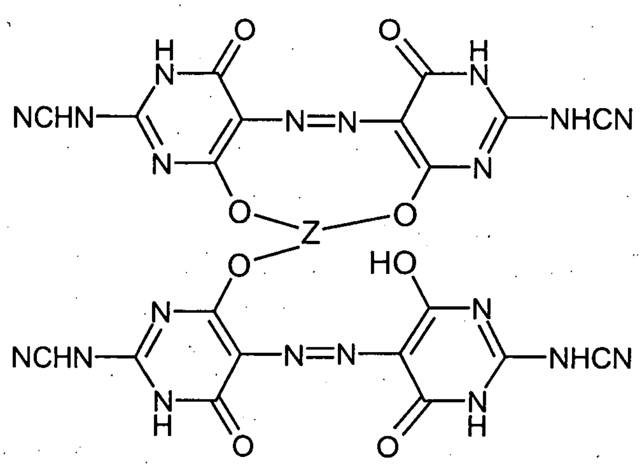

(IIIb),

worin Z für Sc, Y, La, Ce, Pr, Nd, Pm, Sm Eu, Gd, Tb, Dy, Ho, Er, Tm, Yb oder Lu steht.

Die erfindungsgemäße Verwendung der Metallkomplexe bezieht sich grundsätzlich auf alle Pigmentanwendungszwecke. Bevorzugt ist die Verwendung zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wässrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

Besonders bevorzugt ist die Verwendung der Metallkomplexe als Pigment für Laminat, als Pigment für die Verwendung in Farbfiltern für LCDs, sowie als Pigment für den Ink Jet Druck.

Im Allgemeinen bildet die Metallkomplexverbindung ein schichtförmiges Kristallgitter. Vorzugsweise handelt es sich dabei um Metallverbindungen, die ein Kristallgitter ausbilden, das aus im wesentlichen ebenen Schichten besteht. Die Metallkomplexverbindungen enthalten keine Verbindungen interkaliert. Sie können aber Kristallwasser enthalten.

Als erfindungsgemäß zu verwendende Metallkomplexe kommen auch solche in Frage, bei denen eine metallhaltige Verbindung, z.B. ein Salz oder Metallkomplex in das Kristallgitter des Metall-Komplexes eingebaut ist. In diesem Fall kann in Formel (I) ein Teil des Metalls durch andere Metallionen ersetzt sein oder es können weitere Metallionen in eine mehr oder weniger starke Wechselwirkung mit dem Metall-Komplex treten.

Die bevorzugten erfindungsgemäß zu verwendenden Metallkomplexe der Azoverbindungen der Formel (I) besitzen einen Farbort, der durch die folgenden Bereiche der sogenannten Normfarbwertanteile x und y definiert ist:

(Die Farborte werden an Alkyd-Melamin-Lacken nach DIN 53 238 bestimmt, in denen die Pigmente völlig dispergiert vorliegen.)

Bevorzugte Werte sind:

$$x = 0{,}40 \text{ bis } 0{,}70 \text{ und gleichzeitig } y = 0{,}15 \text{ bis } 0{,}45, \text{ bevorzugt}$$

$$x = 0{,}45 \text{ bis } 0{,}65 \text{ und gleichzeitig } y = 0{,}25 \text{ bis } 0{,}40, \text{ besonders bevorzugt}$$

$$x = 0{,}50 \text{ bis } 0{,}60 \text{ und gleichzeitig } y = 0{,}30 \text{ bis } 0{,}35$$

insbesondere

$$x = 0{,}53 \text{ bis } 0{,}57 \text{ und gleichzeitig } y = 0{,}30 \text{ bis } 0{,}35$$

mit

$$x = \frac{X}{X + Y + Z} \qquad y = \frac{Y}{X + Y + Z},$$

wobei X, Y und Z Normfarbwerte sind.

Das Normfarbsystem ist beschrieben in Bayer Farben Revue, Sonderheft 3/2 D, 1986; S. 12-14.

Die Erfindung betrifft weiterhin Metallkomplexe, die Komplexen von Metallen mit einer Azo-Verbindung der Formel (I) oder einer ihren tautomeren Strukturen entsprechen, dadurch gekennzeichnet, dass das Metall ausgewählt wird aus der Gruppe Scandium (Sc), Yttrium (Y), Cer (Ce), Praseodym (Pr), Neodym (Nd), Promethium (Pm), Samarium (Sm), Europium (Eu), Gadolinium (Gd), Terbium (Tb), Dysprosium (Dy), Holmium (Ho), Erbium (Er), Thulium (Tm), Ytterbium (Yb) und Lutetium (Lu).

Bevorzugte Metalle sind Y, Ce, Pr und Nd jeweils in der dreiwertigen Oxidationsstufe, besonders bevorzugt Ce, Pr und Nd, ganz besonders bevorzugt Ce.

Im Hinblick auf die Azoverbindungen und sonstigen bevorzugten Ausführungsformen gelten die bereits oben für die erfindungsgemäß verwendeten Metallkomplexe gemachten Angaben.

Die Erfindung betrifft weiterhin ein Verfahren zur Herstellung der erfindungsgemäßen Metallkomplexe, das dadurch gekennzeichnet ist, dass die Azoverbindung der Formel (I), vorzugsweise in freier Form oder als Alkalisalz wie Na-, Li- oder K-Salz, mit einem Metallsalz der Metalle ausgewählt aus der Gruppe Scandium (Sc), Yttrium (Y), Cer (Ce), Praseodym (Pr), Neodym (Nd), Promethium (Pm), Samarium (Sm), Europium (Eu), Gadolinium (Gd), Terbium (Tb), Dysprosium (Dy), Holmium (Ho), Erbium (Er), Thulium (Tm), Ytterbium (Yb) und Lutetium (Lu) umgesetzt wird,

vorzugsweise bei pH < 9.

Als Metallsalze kommen vorzugsweise wasserlösliche Salze in Frage, insbesondere Chloride, Bromide, Acetate, Nitrate usw. Bevorzugt eingesetzte Salze der Scandiumgruppe besitzen eine Wasserlöslichkeit von mehr als 20 g/l, insbesondere mehr als 50 g/l bei 20°C.

Man kann auch Mischungen verschiedener Metallsalze der oben genannten Metalle untereinander oder mit Salzen anderer Metalle verwenden. Die Verwendung von solchen Salzmischungen empfiehlt sich insbesondere für die Erzielung von Zwischentönen der farbigen Endprodukte.

Die auf diese Weise erhaltenen erfindungsgemäßen Metallkomplexe können dann durch Filtration ihrer wässrigen Suspension als wässriger Presskuchen isoliert werden. Dieser Presskuchen kann beispielsweise nach Waschen mit heißem Wasser, nach üblichen Trocknungsverfahren getrocknet werden.

Als Trocknungsverfahren kommen beispielsweise die Schaufeltrocknung oder die Sprühtrocknung entsprechend wässriger Slurrys in Frage.

Anschließend kann das Pigment nachgemahlen werden.

Sofern die erfindungsgemäßen Metallkomplexe für die gewünschte Anwendung zu kornhart bzw. zu dispergierhart sind, können sie beispielsweise gemäß der in DE-A 19 847 586 beschriebenen Methode in kornweiche Pigmente umgewandelt werden.

Dabei wird vorzugsweise der wässrige Presskuchen als wässriger Slurry sprühgetrocknet, wobei der Slurry vorzugsweise Ammoniak und/oder eine anorganische oder organische Base enthält.

Bevorzugt ist es ebenfalls, die erfindungsgemäßen Metallkomplexe, sofern sie eine Dispergierhärte von >250 besitzen in Gegenwart von Wasser und gegebenenfalls organischen Lösungsmitteln entweder bei einem pH von 1 bis 4, vorzugsweise 1 bis 3, insbesondere 1,5 bis 2,5 oder bei einem pH von 9 bis 13, vorzugsweise von 10 bis 11 und bei einer Temperatur von 80 bis 180°C, vorzugsweise 90 bis 140°C, insbesondere bei 95 bis 110°C zu tempern.

Die Temperung ist vorzugsweise dann beendet, wenn der erfindungsgemäße Metallkomplex, eine Dispergierhärte von kleiner 250 besitzt.

Die Erfindung betrifft daher auch die erfindungsgemäßen Metallkomplexe mit einer Dispergierhärte von kleiner 250 (gemessen in Anlehnung an DIN 53 775, Teil 7) wobei die Temperatur der Kaltwalzung 25°C, die der Warmwalzung 150°C, beträgt.

Im Rahmen dieser Anmeldung werden die Metallkomplexe einer Azoverbindung der Formel (I) als Pigmente bezeichnet. Die Erfindung betrifft daher auch Pigmentpräparationen, enthaltend wenigstens ein erfindungsgemäßes Pigment und ein Dispergiermittel.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm.

Bevorzugt handelt es sich bei den Pigmentpräparationen um feste Präparationen, die vorzugsweise als Pulver oder Granulate vorliegen. Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobernsteinsäureester sowie Alkyl-, benzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene $C_6$-$C_{22}$-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesonders als Alkali oder Aminsalze, vorzugsweise als Diethylaminsalz vor. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:

a1) gesättigten und/oder ungesättigten Fettalkoholen mit 6 bis 22 C-Atomen oder

b1) Alkylphenolen mit 4 bis 12 C-Atomen im Alkylrest oder

c1) gesättigten und/oder ungesättigten Fettaminen mit 14 bis 20 C-Atomen oder

d1) gesättigten und/oder ungesättigten Fettsäuren mit 14 bis 20 C-Atomen oder

e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.
Als Dispergiermittel eignen sich ebenfalls die aus den prioritätsälteren DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert:

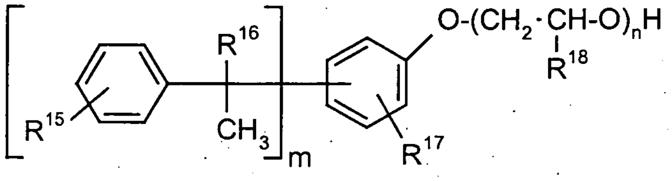

(X),

in der

$R^{15}$ Wasserstoff oder $C_1$-$C_4$-Alkyl bedeutet,

$R^{16}$ für Wasserstoff oder $CH_3$ steht,

$R^{17}$ Wasserstoff, $C_1$-$C_4$-Alkyl, $C_1$-$C_4$-Alkoxy, $C_1$-$C_4$-Alkoxycarbonyl oder Phenyl bedeutet,

m eine Zahl von 1 bis 4 bedeutet,

n eine Zahl von 6 bis 120 bedeutet,

$R^{18}$ für jede durch n indizierte Einheit gleich oder verschieden ist und für Wasserstoff, $CH_3$ oder Phenyl steht, wobei im Falle der Mitanwesenheit von $CH_3$ in den verschiedenen -(-$CH_2$-CH($R^{18}$)-O-)-Gruppen in 0 bis 60% des Gesamtwertes von n $R^{18}$ für $CH_3$ und in 100 bis 40 % des Gesamtwertes von n $R^{18}$ für Wasserstoff steht und wobei im Falle der Mitanwesenheit von Phenyl in den verschiedenen -(-$CH_2$-CH($R^{18}$)-O-)-Gruppen in 0 bis 40 % des Gesamtwertes von n $R^{18}$ für Phenyl und in 100 bis 60 % des Gesamtwertes von n $R^{18}$ für Wasserstoff steht.

Die Ester der Alkoxylierungsprodukte (X) entsprechen der Formel (XI)

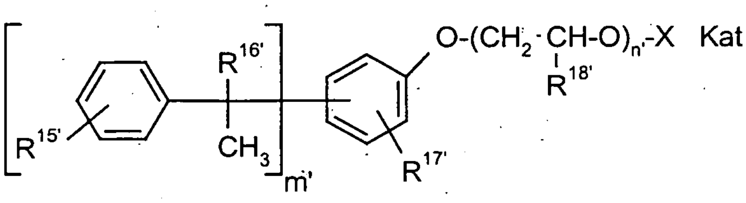

(XI),

in der

| | |
|---|---|
| $R^{15'}$, $R^{16'}$, $R^{17'}$, $R^{18'}$, m' und n' | den Bedeutungsumfang von $R^{15}$, $R^{16}$, $R^{17}$, $R^{18}$, m bzw. n, jedoch unabhängig hiervon, annehmen, |
| X | die Gruppe $-SO_3$, $-SO_2$, $-PO_3$ oder $-CO-(R^{19})-COO$ bedeutet, |
| Kat | ein Kation aus der Gruppe von H, Li, Na, K, $NH_4$ oder $HO-CH_2CH_2-NH_3$ ist, wobei im Falle von X = $-PO_3$ zwei Kat vorliegen und |
| $R^{19}$ | für einen zweiwertigen aliphatischen oder aromatischen Rest steht, vorzugsweise für $C_1$-$C_4$-Alkylen, insbesondere Ethylen, $C_2$-$C_4$- einfach ungesättigte Reste, insbesondere Acetylen oder gegebenenfalls substituiertes Phenylen, insbesondere ortho-Phenylen steht, wobei als mögliche Substituenten vorzugsweise $C_1$-$C_4$-Alkyl, $C_1$-$C_4$-Alkoxy, $C_1$-$C_4$-Alkoxycarbonyl oder Phenyl in Frage kommen. |

Spezielle Einzelverbindungen der Formel (XI) sind beispielsweise aus DE-A 19 712 486 und Gemische der Formeln (X) und (XI) sind beispielsweise DE-A-19 535 256 bekannt, die jeweils Bestandteile dieser Anmeldung sind.
Als ein bevorzugtes Dispergiermittel wird die Verbindung der Formel (XI) eingesetzt. Vorzugsweise eine Verbindung der Formel (XI), worin X einen Rest der Formel $-CO-(R^{19})-COO-$ bedeutet und $R^{19}$ die obige Bedeutung besitzt.
Bevorzugt ist es ebenfalls als Dispergiermittel eine Verbindung der Formel (XI) zusammen mit einer Verbindung der Formel (X) einzusetzen. Vorzugsweise enthält das Dispergiermittel in diesem Fall 5 bis 99 Gew.-% der Verbindung (XI) und 1 bis 95 Gew.-% der Verbindung (X).
Als polymere Dispergiermittel kommen beispielsweise wasserlösliche sowie wasseremulgierbare Typen in Frage, z.B. Homo- sowie Co-Polymerisate, wie statistischeoder Block-Copolymerisate.
Besonders bevorzugte Dispergiermittel sind polymere Dispergiermittel wie beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wässrigen Medium sicher. Derartige polymere Dispergiermittel und deren Synthese sind beispielsweise aus EP-A 518 225 sowie EP-A 556 649 bekannt.
Das Dispergiermittel wird vorzugsweise in einer Menge von 0,1 bis 100 Gew.-%, insbesondere 0,5 bis 60 Gew.-%, bezogen auf das eingesetzte Pigment in der Pigmentpräparation, verwendet.
Selbstverständlich kann die Präparation noch weitere Zusätze enthalten. So können beispielsweise die als die Viskosität einer wässrigen Suspension erniedrigenden und den Feststoffgehalt erhöhenden Zusätze wie Carbonsäure- und Sulfonsäureamide in einer Menge von bis zu 10 Gew.-%, bezogen auf die Präparation zugesetzt werden.
Weitere Zusätze sind beispielsweise anorganische und organische Basen sowie für Pigmentpräparation übliche Zusätze. Als Basen sind zu nennen: Alkalihydroxide, wie beispielsweise NaOH, KOH oder organische Amine wie Alkylamine, insbesondere Alkanolamine oder Alkylalkanolamine.
Als besonders bevorzugt sind zu nennen Methylamin, Dimethylamin, Trimethylamin, Ethanolamin, n- Propanolamin, n-Butanolamin, Diethanolamin, Triethanolamin, Methylethanolamin oder Dimethylethanolamin.
Als Carbonsäure- und Sulfonsäureamide sind beispielsweise geeignet, Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsaure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.
Die Base ist gegebenenfalls bis zu einer Menge von 20 Gew.-%, vorzugsweise bis 10 Gew.-%, bezogen auf das Pigment, enthalten.
Besonders bevorzugt enthält die erfindungsgemäße Präparation aber mehr als 90 insbesondere mehr als 95, vorzugsweise mehr als 97 Gew.-% an erfindungsgemäßen Pigment, Dispergiermittel und gegebenenfalls Base.
Die Erfindung betrifft weiterhin ein Verfahren zur Herstellung der erfindungsgemäßen Pigmentpräparation, dadurch gekennzeichnet, dass man Pigment und Dispergiermittel sowie gegebenenfalls weitere Zusätze mischt.

## Beispiele

### Beispiel 1

0,19 Mol Cyaniminoazobarbitursäure (65,4g) wird in 1500 g Wasser eingetragen, mit 0,11 Mol $La(NO_3)_3$ in Form einer wässrigen Lösung versetzt und bei pH = 2 auf 97°C erhitzt. 3 Std. wird bei 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.
Farbort (Purton): X=23,4 Y=14,0 Z= 5,7

**Beispiel 1a**

Man verfährt wie in Beispiel 1. Das erhaltene Pigmentpulver wird in eine wässrige Casein-Binderformulierung eingearbeitet.
Farbort (Purton): X=48,4 Y=36,2 Z= 17,3

Diese Binderformulierung wird in Abmischung mit gelben Farbmitteln für die Herstellung von thermostabilem und lichtechtem Buchenholzlaminat eingearbeitet.

**Beispiel 2**

0,19 Mol Cyaniminoazobarbitursäure (65,4g) wird in 1500 g Wasser eingetragen, mit 0,11 Mol $La(NO_3)_3$ in Form einer wässrigen Lösung versetzt und bei pH = 4 auf 97°C erhitzt. 3 Std. wird bei 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.
Farbort (Purton): X = 25,0 Y = 14,6 Z = 5,6

**Beispiel 2a**

Man verfährt wie in Beispiel 2. Das erhaltene Pigmentpulver wird in eine wässrige Casein-Binderformulierung eingearbeitet und für die in Beispiel 1a angegebene Verwendung eingesetzt.
Farbort (Purton): X = 50,1 Y=37,4 Z = 17,5

**Beispiel 3**

0,19 Mol Cyaniminoazobarbitursäure (65,4g) wird in 1500 g Wasser eingetragen, mit 0,2 Mol $La(NO_3)_3$ in Form einer wässrigen Lösung versetzt und bei pH = 7 auf 97°C erhitzt. 3 Std. wird bei 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.
Farbort (Purton): X = 23,6 Y=14,5 Z = 5,2

**Beispiel 3a**

Man verfährt wie in Beispiel 3. Das erhaltene Pigmentpulver wird in eine wässrige Casein-Binderformulierung eingearbeitet und wie in Beispiel 1a verwendet.
Farbort (Purton): X=55,0. Y=45,6 Z= 10,1

**Beispiel 4**

0,19 Mol Cyaniminoazobarbitursäure (65,4g) wird in 1500 g Wasser eingetragen. Der Ansatz wird auf 97°C erhitzt. Innerhalb 30 min wird 0,11 Mol $CeCl_3$ in Form einer wässrigen Lösung zugetropft, wobei der pH mit KOH-Lösung auf pH = 3 gehalten wird. 5 Std. wird bei pH = 3 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.
Farbort (Purton): X=22,8 Y = 13,5 Z = 5,5

**Beispiel 4a**

Man verfährt wie in Beispiel 4. Das erhaltene Pigmentpulver wird in eine wässrige Casein-Binderformulierung eingearbeitet und wie in Beispiel 1a verwendet.

Farbort (Purton): X=43,6 Y=29,6 Z = 10,1

**Beispiel 5**

0,19 Mol Cyaniminoazobarbitursäure (65,4g) werden in 1500 g Wasser eingetragen. Der Ansatz wird auf 97°C erhitzt. Innerhalb 30 min werden 0,11 Mol $CeCl_3$ in Form einer wässrigen Lösung zugetropft, wobei der pH mit KOH-Lösung auf pH = 4 gehalten wird. 5 Std. wird bei pH = 4 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.
Farbort(Purton): X=23,4 Y=13,8 Z= 5,5

**Beispiel 5a**

Man verfährt wie in Beispiel 4. Das erhaltene Pigmentpulver wird in eine wässrige Casein-Binderformulierung eingearbeitet und wie in Beispiel 1a verwendet.
Farbort (Purton): X=44,0 Y = 29,8 Z = 9,8

**Beispiel 5b**

Die Synthese, Trocknung und Mahlung erfolgt wie in Beispiel 5. Das so erhaltene Pigmentpulver wird nach DIN 53 775 Teil 7 in PVC-P eingearbeitet.
Dispergierhärte: 270

**Beispiel 5c**

0,19 Mol Cyaniminoazobarbitursäure (65,4 g) werden in 1500 g Wasser eingetragen. Der Ansatz wird auf 97°C erhitzt. Innerhalb 30 min werden 0,11 Mol $CeCl_3$ in Form einer wässrigen Lösung zugetropft, wobei der pH mit KOH-Lösung auf pH = 4 gehalten wird. 5 Stunden wird bei pH = 4 und 97°C gerührt. Anschließend wird mit Salzsäure auf pH 1,5 gestellt und 6 Stunden bei 98°C gerührt. Danach wird mit KOH-Lösung auf pH 4 gestellt, auf einer Saugnutsche isoliert, bei 80°C im Vakuumtrockenschrank getrocknet und in einer üblichen Labormühle ca. 2 min gemahlen.

Das so erhaltene Pigmentpulver wird nach DIN 53 775 Teil 7 in PVC-P eingearbeitet.

Dispergierhärte: 105.

**Beispiel 6**

0,19 Mol Cyaniminoazobarbitursäure (65,4g) werden in 1500 g Wasser eingetragen. Der Ansatz wird auf 97°C erhitzt. Innerhalb 30 min werden 0,11 Mol $CeCl_3$ in Form einer wässrigen Lösung zugetropft, wobei der pH mit KOH-Lösung auf pH = 5 gehalten wird. 5 Std. wird bei pH = 5 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten Lack.

Farbort (Purton): X = 23,4 Y = 14,0 Z = 5,6

**Beispiel 6a**

Man verfährt wie in Beispiel 4. Das erhaltene Pigmentpulver wird in eine wässrige Casein-Binderformulierung eingearbeitet und wie in Beispiel 1 verwendet.
Farbort (Purton): X=44,3 Y=29,9 Z= 8,6

**Beispiel 7**

0,19 Mol Cyaniminoazobarbitursäure (65,4g) werden in 1500 g Wasser eingetragen. Der Ansatz wird auf 97°C erhitzt. Innerhalb 30min werden 0,11 Mol $NdCl_3$ in Form einer wässrigen Lösung zugetropft, wobei der pH mit KOH-Lösung auf pH = 2 gehalten wird. 5 Std. wird bei pH = 2 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.

Farbort (Purton): X=23,3 Y=13,8 Z= 5,6

## Beispiel 7a

Man verfährt wie in Beispiel 7. Das erhaltene Pigmentpulver wird in eine wässrige Casein-Binderformulierung eingearbeitet und wie in Beispiel 1 verwendet.

Farbort (Purton): X=43,8 Y = 29,8 Z = 10,5

## Beispiel 8

0,19 Mol Cyaniminoazobarbitursäure (65,4g) werden in 1500 g Wasser eingetragen. Der Ansatz wird auf 97°C erhitzt. Innerhalb 30 min werden 0,11 Mol $NdCl_3$ in Form einer wässrigen Lösung zugetropft, wobei der pH mit KOH-Lösung auf pH = 4 gehalten wird. 5 Std. wird bei pH = 4 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.

Farbort (Purton): X=25,7 Y = 15,2 Z= 5,6

## Beispiel 8a

Man verfährt wie in Beispiel 8. Das erhaltene Pigmentpulver wird in eine wässrige Casein-Binderformulierung eingearbeitet und wie in Beispiel 1a verwendet.

Farbort (Purton): X=44,0 Y=29,1 Z = 8,4

## Beispiel 9

0,19 Mol Cyaniminoazobarbitursäure (65,4g) werden in 1500 g Wasser eingetragen. Der Ansatz wird auf 97°C erhitzt. Innerhalb 30 min werden 0,2 Mol $NdCl_3$ in Form einer wässrigen Lösung zugetropft, wobei der pH mit KOH-Lösung auf pH = 6 gehalten wird. 5 Std. wird bei pH = 6 und 97°C gerührt. Anschließend wird auf einer Saugnutsche isoliert, bei 80°C im Vakuumtrockenschrank getrocknet und in einer üblichen Labormühle ca. 2 Minuten gemahlen.

Das so erhaltene Pigmentpulver wird nach DIN 53 238 in einem Alkyd-Melamin-Lacksystem dispergiert und ergibt einen farbstarken, brillanten und lichtechten Lack.

Farbort (Purton): X=26,8 Y=16,2 Z= 5,2

## Beispiel 9a

Man verfährt wie in Beispiel 9. Das erhaltene Pigmentpulver wird in eine wässrige Binderformulierung eingearbeitet und wie in Beispiel 1a verwendet.

Farbort (Purton): X=64,2 Y=54,4 Z = 19,2

## Beispiel 10

Herstellung einer organischen Dispersion für LCD

9 kg Pulver eines nach Beispiel 3 hergestellten Produktes werden in 12 kg Methoxypropylacetat unter Zusatz von 4,5 kg eines Dispergators wie beispielsweise Solsperse 38500 (Firma Avecia) mit einem Dissolver bei 3000 U/Minute angeschlagen und 3 h gerührt. Diese Dispersion wird dann auf einer Netzschmühle des Typs LMJ-2 mit Zirkonoxidperlen von 0,4-0,7 mm in 5 Passagen gemahlen. Diese Dispersion des Lanthansalzes wird in einen Alkyd-Melaminlack eingemischt und nach DIN 53238 vermessen.

Die Dispersion wird als farbstarke, brillante und lichtechte Nuancierkomponente in den roten Farbpunkten von LCDs eingesetzt.

Farbort: X=22 Y=15 Z=5,2

**Beispiel 11**

Herstellung einer wässrigen Dispersion zur Einfärbung von Laminat

428 g eines 35 % Presskuchens nach Beispiel 3 werden mit 222g deionisiertem Wasser, 30 g eines Na-Salz eines Naphthalinsulfonsäure-Formaldehyd-Kondensates wie beispielsweise Tamol NNO der BASF und 30 g eines hochmolekularem BlockCopolymeren mit pigmentaffinen Gruppen wie beispielsweise BYK 184 (BYK Chemie) im Dissolver bei 3000 U/Minute angeschlagen und 1 Stunde gerührt. Die Dispersion wird auf einer Laborperlmühle mit 0,4-0,7 mm Zirkonoxidperlen in 4 Passagen gemahlen. Die Dispersion wird in einen wässrigen Binder eingearbeitet, aufgestrichen und farbmetrisch vermessen. Die Farbstärke beträgt 120% bezogen auf Pigmentpulver.
Farbort: X=23 Y=14,5 Z=5

Diese Dispersion wird in Abmischung mit gelben Farbmitteln für die Herstellung von thermostabilem und lichtechtem Buchenholzlaminat eingesetzt.

**Beispiel 12**

Herstellung einer Pigmenttinte aus dem Cersalz der Cyaniminazobarbitursäure

Mahlung des Pigmentes:

In eine Perlmühle werden 364 g deionisiertes Wasser, 15 g eines Na-Salz eines Naphthalinsulfonsäure-Formaldehyd-Kondensates wie Tamol NH 8807, 10 g eines Emulgators wie Emulgator PD von Bayer AG, 1 g eines Entschäumers wie Surfinol E-104 von Air Products und 250 ml Zirkonoxidperlen mit einem Durchmesser von 0,4 - 0,6 mm gegeben. Sobald die Mischung homogen geworden ist, werden 75 g des Cersalzes der Cyaniminoazobarbitursäure, hergestellt nach Beispiel 4, eingestreut und 1 Stunde gemahlen. Die Dispersion wird über ein 50 um Sieb filtriert.

Herstellung der Tinte:

7,95 g deionisiertes Wasser, 3,75 g 1,5-Pentendiol, 2,5 g Polyethylenglykol 200, 1,25 g N-Methylpyrrolidon werden vorgelegt und mit 8,3 g der Pigmentdispersion vermischt. Diese Tinte wird über einen 5 μm Filter filtriert und in einem HP 890 Tintenstrahldrucker verdruckt. Der Farbort auf Premiumpapier ist : X=23,5; Y= 15,5; Z= 5.

Tamol ist ein Handelsprodukt der BASF AG

Emulgator PD ist ein Handelsprodukt der Bayer AG

Surfinol E 104 ist ein Handelsprodukt von Air Products

**Patentansprüche**

1. Verwendung von Metallkomplexen, die Komplexen von Metallen der Scandiumgruppe mit einer Azo-Verbindung, der Formel (I) oder einer ihrer tautomeren Strukturen entsprechen

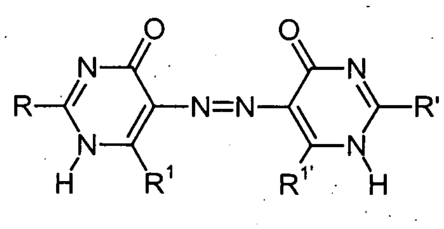

(I)

worin
unter Metallen der Scandiumgruppe die Metalle Scandium (Sc), Yttrium (Y), Lanthan (La), Cer (Ce), Praseodym (Pr), Neodym (Nd), Promethium (Pm), Samarium (Sm) Europium (Eu), Gadolinium (Gd), Terbium (Tb), Dysprosium (Dy), Holmium (Ho), Erbium (Er), Thulium (Tm), Ytterbium (Yb) und Lutetium (Lu) verstanden werden,

R für OH, $NH_2$, NH-CN, Arylamino oder Acylamino steht und

R' für $NH_2$, NH-CN, Arylamino oder Acylamino steht und

$R^1$ und $R^{1'}$ unabhängig voneinander -OH oder -$NH_2$ bedeuten, als Pigmente.

**2.** Verwendung gemäß Anspruch 1, **dadurch gekennzeichnet, dass** die Metallkomplexe zum Färben oder Einfärben von natürlichen, synthetischen oder halbsynthetischen organischen oder anorganischen Stoffen eingesetzt werden.

**3.** Verwendung der Metallkomplexe gemäß Anspruch 1 zur Herstellung von Druckfarben, Leimfarben oder Binderfarben, für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.

**4.** Verwendung der Metallkomplexe gemäß Anspruch 1 als Pigment für Laminat, als Pigment für Farbfilter in Flüssigkristallanzeigen, als Pigment für den Ink Jet Druck.

**5.** Metallkomplexe, die Komplexen von Metallen mit einer Azo-Verbindung der Formel (I) oder ihren tautomeren Strukturen entsprechen

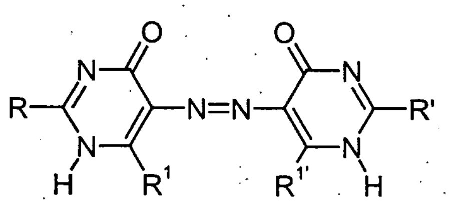

(I),

in der

R für OH, $NH_2$, NH-CN, Arylamino oder Acylamino steht und

R' für $NH_2$, NH-CN, Arylamino oder Acylamino steht und

$R^1$ und $R^{1'}$ unabhängig voneinander -OH oder -$NH_2$ bedeuten,

**dadurch gekennzeichnet, dass** das Metall ausgewählt wird aus der Gruppe Scandium (Sc), Yttrium (Y), Cer (Ce), Praseodym (Pr), Neodym (Nd), Promethium (Pm), Samarium (Sm) Europium (Eu), Gadolinium (Gd), Terbium (Tb), Dysprosium (Dy), Holmium (Ho), Erbium (Er), Thuliun (Tm), Ytterbium (Yb) und Lutetium (Lu).

**6.** Metallkomplexe gemäß Anspruch 5, **dadurch gekennzeichnet, dass** die Azoverbindung der Formel (I), der Formel (IIa) oder (IIb) oder einer tautomeren Form davon entspricht

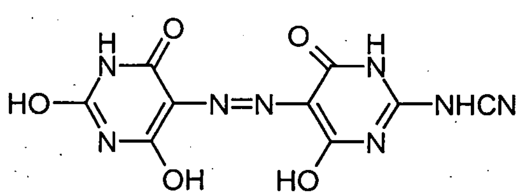

(IIa),

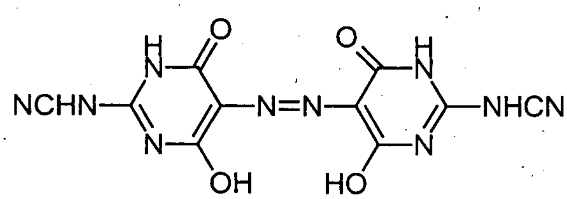

(IIb).

**7.** Metallkomplexe der Scandiumgruppe gemäß Anspruch 5, **dadurch gekennzeichnet, dass** auf ein Metallatom eine Azoeinheit der Formel (I) kommt, (1:1-Komplexe).

**8.** Metallkomplexe der Scandiumgruppe gemäß Anspruch 5, **dadurch gekennzeichnet, dass** auf ein Metallatom zwei Azoeinheiten kommen, (2:1-Komplexe).

**9.** Metallkomplexe der allgemeinen Formeln (IIIa) und (IIIb)

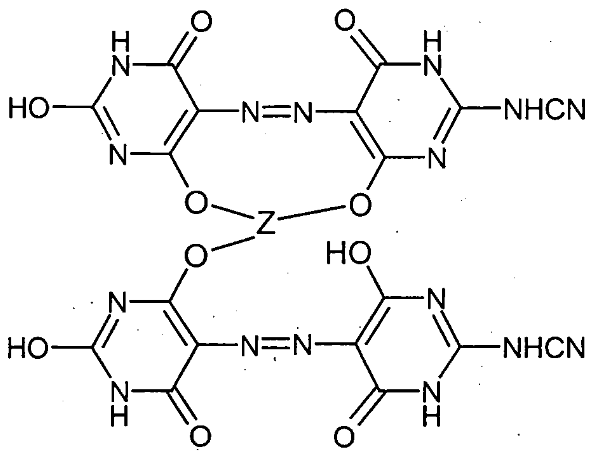

(IIIa),

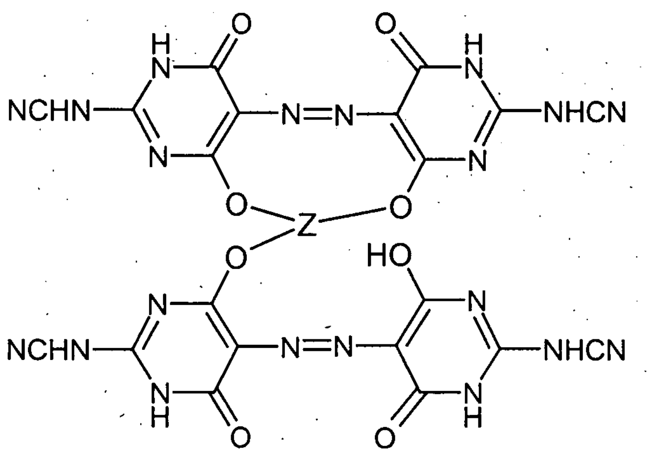

(IIIb),

worin Z für ein Metall aus der Gruppe der Metalle Scandium (Sc), Yttrium (Y), Lanthan (La), Cer (Ce), Praseodym (Pr), Neodym (Nd), Promethium (Pm), Samarium (Sm) Europium (Eu), Gadolinium (Gd), Terbium (Tb), Dysprosium (Dy), Holmium (Ho), Erbium (Er), Thulium (Tm), Ytterbium (Yb) und Lutetium (Lu) steht.

**10.** Metallkomplexe gemäß Anspruch 9, worin

Z für ein Metall aus der Gruppe der Metalle Yttrium (Y), Lanthan (La), Cer (Ce), Praseodym (Pr) und Neodym (Nd), steht.

**11.** Metallkomplexe gemäß Anspruch 9, in denen Z für ein Metall aus der Gruppe Cer (Ce), Praseodym (Pr) und Neodym (Nd) steht.

**12.** Metallkomplexe gemäß Anspruch 9, die der Formel (IIIc) oder einer ihrer tautomeren Strukturen entsprechen

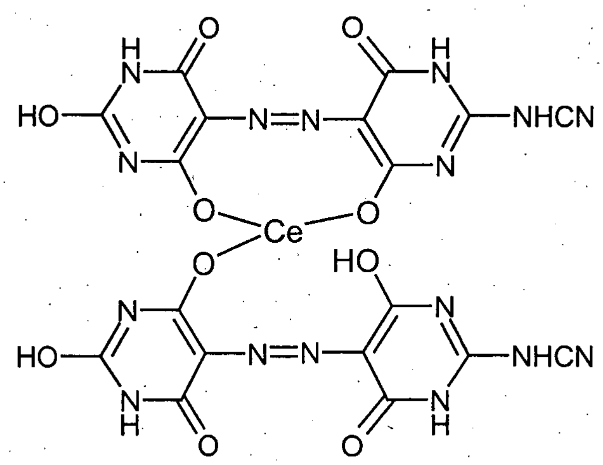

(IIIc).

**13.** Metallkomplexe der Scandiumgruppe gemäß Anspruch 5 oder Anspruch 9, **dadurch gekennzeichnet, dass** ihr Farbort durch folgende Normfarbwertanteile

x und y definiert wird:

x = 0,40 bis 0,70

y = 0,15 bis 0,45.

**14.** Metallkomplexe der Scandiumgruppe gemäß Anspruch 5 oder Anspruch 9, **dadurch gekennzeichnet, dass** sie eine Dispergierhärte von kleiner 250 aufweisen.

**15.** Verfahren zur Herstellung der Metallkomplexe gemäß Anspruch 5 oder Anspruch 9, **dadurch gekennzeichnet, dass** die Azoverbindungen der Formel (I)

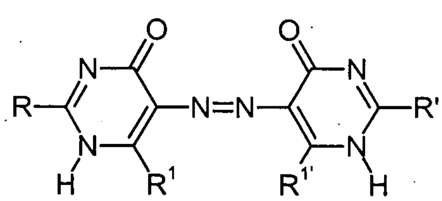

(I),

worin

R für OH, $NH_2$, NH-CN, Arylamino oder Acylamino steht und

R' für $NH_2$, NH-CN, Arylamino oder Acylamino steht und

R' und $R^{1'}$ unabhängig voneinander -OH oder $-NH_2$ bedeuten,

mit einem Metallsalz der Scandiumgruppe komplexiert werden.

**16.** Pigmentpräparation enthaltend als Pigment wenigstens einen Metallkomplex gemäß Anspruch 5 oder Anspruch 9 und wenigstens ein Dispergiermittel.

**17.** Verfahren zur Herstellung der Pigmentpräparation gemäß Anspruch 19, **dadurch gekennzeichnet, dass** man als Pigment wenigstens einen Metallkomplex gemäß Anspruch 5 oder 9 und wenigstens ein Dispergiermittel mischt.